# NEUE EUROPÄISCHE PATENTSCHRIFT

(11) **EP 3 395 622 B2**
(45) Veröffentlichungstag und Bekanntmachung des Hinweises auf die Entscheidung über den Einspruch: **26.02.2025**
(45) Hinweis auf die Patenterteilung: 06.10.2021
(21) Anmeldenummer: 18156406.3
(22) Anmeldetag: 13.02.2018
(51) Int. Cl.: B60R 25/25

(54) **VERFAHREN ZUM BETREIBEN EINES AUTHENTIFIZIERUNGSSYSTEMS, AUTHENTIFIZIERUNGSSYSTEM UND VERWENDUNG**
AUTHENTICATION SYSTEM AND METHOD FOR OPERATING AN AUTHENTICATION SYSTEM AS WELL AS USE
PROCÉDÉ DE FONCTIONNEMENT D'UN SYSTÈME D'AUTHENTIFICATION, SYSTÈME D'AUTHENTIFICATION ET UTILISATION

(30) Priorität: 28.04.2017 DE 102017109160; 13.06.2017 DE 102017112942
(43) Veröffentlichungstag der Anmeldung: 31.10.2018
(73) Patentinhaber: Huf Hülsbeck & Fürst GmbH & Co. KG, 42551 Velbert (DE)
(72) Erfinder: Tomakidi, Thomas, 42551 Velbert (DE)
(74) Vertreter: Zenz Patentanwälte Partnerschaft mbB

(56) Entgegenhaltungen:
- WO-A1-2013/101052
- WO-A1-2017/062448
- WO-A1-2017/066286
- DE-A1- 102013 221 936
- DE-A1- 102014 001 321
- DE-A1- 102014 119 401
- DE-A1- 102016 118 984
- US-A1- 2015 028 995
- US-A1- 2016 320 469
- US-A1- 2016 368 455
- US-B1- 9 187 060

## Beschreibung

Die Erfindung betrifft ein Verfahren zum Betreiben eines Authentifizierungssystems für ein Kraftfahrzeug.

Aus dem Stand der Technik sind verschiedene passive Authentifizierungssysteme bekannt, mit denen Funktionen an einem Kraftfahrzeug ausgelöst werden können. Das passive Authentifizieren wird, je nach Hersteller und Fahrzeugtyp, für unterschiedliche Fahrzeugfunktionen genutzt. Beispiele sind das Öffnen von Seitentüren oder der Heckklappe und die Freischaltung des Motorstarts.

Beispiele für derartige Systeme sind unter den Bezeichnungen Keyless Entry, Keyless Go und Passive Entry Passive Start bekannt.

Die genannten Systeme basieren auf der Durchführung eines Verifikationsdialogs. Dieser Verifikationsdialog wird zwischen einem portablen Authentifikationsgeber und einer fahrzeugseitigen Infrastruktur durchgeführt. Der portable Authentifikationsgeber befindet sich hierfür in Besitz eines Bedieners. Aus dem Stand der Technik sind insbesondere Funkschlüssel (auch als ID-Geber bezeichnet) bekannt, die mittels kombinierter LF-/HF-Funkkommunikation mit der fahrzeugseitigen Infrastruktur in Kontakt treten und Informationen mit dieser austauschen.

Derartige passive Authentifizierungssysteme nutzen neben den Authentifizierungsinformationen aus dem Verifikationsdialog in vielen Fällen die Position des Authentifikationsgebers. Die Funktion am Fahrzeug wird in derartigen Ausgestaltungen in Abhängigkeit davon ausgelöst, ob die Position des Authentifikationsgebers mit der angeforderten Funktion plausibel in Einklang steht. So kann beispielsweise ein Starten des Motors an die Voraussetzung geknüpft werden, dass der Authentifikationsgeber sich innerhalb des Fahrzeugs befindet.

Mit der zunehmenden Verbreitung und fortschreitenden Weiterentwicklung von Bluetooth-Kommunikation wird deren Einbindung in Authentifizierungssysteme für Fahrzeuge zunehmend attraktiv. Dadurch, dass Bluetooth in vielen elektronischen Geräten, wie beispielsweise Smartphones, bereits implementiert ist, geht die Bereitstellung von Bluetooth-Komponenten mit einem großen Komfort für den Bediener einher und ist dementsprechend gewünscht.

Ein Beispiel für ein Kraftfahrzeugzugangssystem, welches auf der Nutzung von Bluetooth Low Energy basiert, ist der WO 2017/066286 A1 zu entnehmen.

Mit Hinblick auf die Positionsbestimmung weist die Nutzung von Bluetooth-Kommunikation aufgrund der genutzten Frequenzen jedoch prinzipbedingt den Nachteil auf, dass die Ortsauflösung vergleichsweise gering ist. Ein weiteres Problem besteht darin, dass aufgrund von Abschirmeffekten die Reproduzierbarkeit der Positionsbestimmung unter Nutzung der Bluetooth-Kommunikation begrenzt ist.

Die Aufgabe der Erfindung besteht daher darin, ein verbessertes Verfahren zum Betreiben eines Authentifizierungssystems für ein Fahrzeug bereitzustellen, mit welchem die oben genannten Nachteile überwunden oder zumindest vermindert werden.

Die Aufgabe wird gelöst mit einem Verfahren zum Betrieb eines Authentifizierungssystems für ein Fahrzeug mit den Merkmalen des Anspruchs 1.

Vorteilhafte und zweckmäßige Weiterbildungen und Ausgestaltungen der Erfindung ergeben sich aus den Unteransprüchen.

Das erfindungsgemäße Verfahren nutzt zumindest zwei Fahrzeug-BLE-Schnittstellen, die an dem Fahrzeug angeordnet ist. Der Begriff der BLE-Schnittstelle bezieht sich dabei auf Bluetooth Low Energy. Bei Bluetooth Low Energy handelt es sich um ein Kommunikationsverfahren, welches in einer der Bluetooth-Spezifikationen definiert ist, welche die Versionsnummer 4.0 oder höher aufweisen. Die Bluetooth-Spezifikationen werden von dem Bluetooth-Konsortium bereitgestellt, beispielsweise unter https://www.bluetooth.com/specifications/adopted-specifications.

Der Begriff der BLE-Schnittstelle bezeichnet ein Element oder eine Gruppe von Elementen, welches beziehungsweise welche zur Kommunikation im Sinne der BLE-Übertragungstechnologie in der Lage ist bzw. sind. Der Begriff der BLE-Schnittstelle umfasst sämtliche körperlichen und unkörperlichen Bestandteile, welche für eine BLE-Kommunikation mit einem anderen für BLE-Kommunikation vorgesehenen Gerät erforderlich sind. Insbesondere umfasst der Begriff der BLE-Schnittstelle auch Sende- und/oder Empfangsmittel, wie beispielsweise eine entsprechende Antenne. Auch gegebenenfalls erforderliche, als Software vorliegende, Treiber sind umfasst.

Die Verwendung des BLE-Übertragungsprotokolls befähigt das Fahrzeug dazu, ein Authentifizierungssystem mit einem breiten Spektrum unterschiedlicher Gegengeräte vorzusehen. Insbesondere die gegenwärtig sehr weitgehende Umsetzung der BLE-Spezifikation in Smartphones führt dazu, dass eine Vielzahl von potentiellen Gegengeräten bereitsteht, die individuell für eine Verwendung mit dem Authentifizierungssystem genutzt werden können. Dadurch, dass die BLE-Kommunikation mit vergleichsweise geringem Energieumsatz genutzt werden kann, sind aber neben beispielsweise Smartphones auch eigens für das Authentifizierungssystem vorgesehene individuell angepasste Gegengeräte vorstellbar.

Zusätzlich zu der Fahrzeug-BLE-Schnittstelle sind an dem Fahrzeug zumindest zwei optische Erfassungsvorrichtungen angeordnet.

Die optische Erfassungsvorrichtung erfüllt wenigstens die Anforderung, dass unter Nutzung eines optischen Wirkprinzips die Anwesenheit oder die Nichtanwesenheit eines Bedieners in einer Umgebung der optischen Erfassungsvorrichtung festgestellt werden kann. Die optische Erfassungsvorrichtung kann insbesondere dem Zweck dienen, dem Fahrzeug Informationen über die Lage, Position und/oder den Abstand eines Bedieners von der optischen Erfassungsvorrichtung zu liefern. Diese zusätzlichen Informationen können sodann im Rahmen eines Verifikationsprozesses genutzt werden. Beispielsweise kann die Plausibilität einer jeweils angeforderten Funktion geprüft werden. Auch kann die erfolgreiche Authentifizierung als Bedingung vorsehen, dass der Benutzer eine bestimmte Position aufweist.

Der Begriff der Position ist im Zusammenhang dieser Anmeldung nicht notwendigerweise im Sinne einer vollständigen Ortsermittlung zu verstehen, sondern kann in Zusammenhang mit der im Bezugssystem Fahrzeug bekannten Position und Orientierung der optischen Erfassungsvorrichtung auch als Relativposition verstanden werden. Wesentlich ist, dass mittels der optischen Erfassungsvorrichtung kraftfahrzeugseitig präzisere Informationen über die Position des Bedieners relativ zu dem Kraftfahrzeug erlangt werden als mit der Nutzung der Fahrzeug-BLE-Schnittstelle allein.

Als Gegengerät ist ein portabler Authentifikationsgeber vorgesehen, welcher eine Authentifikationsgeber-BLE-Schnittstelle aufweist. Der Authentifikationsgeber ist also in der Lage, mit der Fahrzeug-BLE-Schnittstelle gemäß einer BLE-Spezifikation Daten beziehungsweise Informationen auszutauschen. Der Authentifikationsgeber weist zumindest Identitätsdaten auf, welche zum Nachweis einer Berechtigung zum Auslösen einer Funktion gegenüber dem Fahrzeug dienen, beispielsweise gegenüber dem fahrzeugseitigen Steuergerät.

Dadurch, dass der Authentifikationsgeber zumindest mit den auf ihm hinterlegten Identitätsdaten auf das Fahrzeug angepasst ist, ist der Authentifikationsgeber Bestandteil des Authentifizierungssystems.

Das Verfahren sieht die folgenden Schritte vor:
- Durchführen einer BLE-basierten Kommunikation zwischen der Fahrzeug-BLE-Schnittstelle und der Authentifikationsgeber-BLE-Schnittstelle;
- fahrzeugseitiges Auswerten der BLE-basierten Kommunikation;
- Ansteuerung der optischen Erfassungsvorrichtung in Abhängigkeit von der Auswertung der BLE-basierten Kommunikation zur optischen Positionsbestimmung oder Entfernungsbestimmung eines Bedieners, der den portablen Authentifikationsgeber mit sich führt.

Das Durchführen der BLE-basierten Kommunikation kann je nach Implementierung des Verfahrens ein zuvor erfolgendes Pairing voraussetzen, ein Pairing im Laufe der Kommunikation umfassen oder auch ohne ein Pairing im Rahmen der Verbindungsanbahnung erfolgen.

Die optische Erfassungsvorrichtung und die Fahrzeug-BLE-Schnittstelle sind zur Durchführung des Verfahrens miteinander gekoppelt. Es kann vorgesehen sein, dass die Fahrzeug-BLE-Schnittstelle unmittelbar mit der optischen Erfassungsvorrichtung gekoppelt ist. Beispielsweise kann vorgesehen sein, dass die optische Erfassungsvorrichtung und die Fahrzeug-BLE-Schnittstelle als ein Modul ausgebildet sind. Es kann aber auch vorgesehen sein, dass die Fahrzeug-BLE-Schnittstelle und optische Erfassungsvorrichtung an unterschiedlichen Positionen des Fahrzeugs angeordnet sind und die beiden miteinander nur mittelbar, beispielsweise über ein fahrzeugseitiges Steuergerät, miteinander gekoppelt sind. Insbesondere kann auch vorgesehen sein, dass die Ansteuerung der optischen Erfassungsvorrichtung in Abhängigkeit von der Auswertung der BLE-basierten Kommunikation durch das fahrzeugseitige Steuergerät vorgenommen wird.

Die Ansteuerung der optischen Erfassungsvorrichtung dient dem Zweck, zur optischen Positionsbestimmung oder Entfernungsbestimmung eines Bedieners beizutragen, der den portablen Authentifikationsgeber mit sich führt.

Die Erfindung dient nicht primär der Erfassung der Position des Authentifikationsgebers, sondern der Erfassung der Position des Bedieners. Es wird also die Annahme getroffen, dass der Bediener im Besitz des Authentifikationsgebers ist. Aus dieser Annahme heraus wird die Auswertung der BLE-basierten Kommunikation mit dem Authentifikationsgeber als valide Ausgangsbasis für die Ansteuerung der optischen Erfassungsvorrichtung angesehen und entsprechend genutzt.

Mit dem erfindungsgemäßen Verfahren wird also eine Nutzung einer optischen Erfassungsvorrichtung kombiniert mit Ergebnissen, die aus einer BLE-basierten Kommunikation erhalten oder abgeleitet werden. Insbesondere können die aus der BLE-basierten Kommunikation gewonnenen Daten als Ausgangspunkt für die Ansteuerung der optischen Erfassungsvorrichtung genutzt werden.

Dies kann beispielsweise die Entscheidung umfassen,
- ob überhaupt Daten der optischen Erfassungsvorrichtung benötigt werden;
- welche optische Erfassungsvorrichtung ausgewählt wird, sofern mehrere optische Erfassungsvorrichtungen am Fahrzeug angeordnet sind;
- mit welchen Einstellungen die optische

Erfassungsvorrichtung genutzt wird, beispielsweise mit welchem Richtwinkel, sofern dieser einstellbar ist.

In der Durchführung des Verfahrens ergibt sich aus der Gesamtheit der vorgenannten erfindungsgemäßen Maßnahmen der Vorteil, dass optisch erfasste Daten kombiniert werden können mit Daten, welche aus der BLE-Kommunikation erhalten wurden. Denn beide Methoden zur Gewinnung von Daten weisen spezifische Vorteile auf.

Das Verfahren zum Betreiben eines Authentifizierungssystems sieht bevorzugt auch einen Schritt des Verifizierungsdialogs vor; dies ist jedoch für die Erfindung nicht wesentlich.

Gemäß einer Weiterbildung des Verfahrens kann vorgesehen sein, dass die optische Erfassungsvorrichtung sich in einem Zustand mit reduzierter Energieaufnahme befindet. Ferner ist vorgesehen, dass die optische Erfassungsvorrichtung aus diesem Zustand mit reduzierter Energieaufnahme in einen Betriebszustand versetzt wird, nachdem die Auswertung der BLE-basierten Kommunikation ergeben hat, dass der portable Authentifikationsgeber sich innerhalb eines vorgegebenen Raums um die Fahrzeug-BLE-Schnittstelle befindet. Das Vorhandensein des Authentifikationsgebers innerhalb des vorgegebenen Raums ist gemäß dieser Weiterbildung also zumindest notwendige Bedingung dafür, dass die optische Erfassungsvorrichtung in ihren Betriebszustand versetzt wird. Der Begriff des vorgegebenen Raums repräsentiert dabei einen Parameter oder eine Kombination von Parametern, welche beispielsweise eine absolute Position, eine relative Position, eine absolute Lage, eine relative Lage und/oder eine Beabstandung definieren oder teilweise definieren.

In einem einfachen Fall kann bereits die Tatsache, dass ein bestimmter Authentifikationsgeber, welcher dem Fahrzeug vorbekannt ist, einen Verbindungsversuch mit der Fahrzeug-BLE-Schnittstelle anstrengt, aufgefasst werden als Erfassung des Authentifikationsgebers innerhalb eines vorgegebenen Raums.

Dadurch, dass Positions- und/oder Entfernungsinformationen aus einer BLE-basierten Kommunikation genutzt werden, wird die Betriebsaufnahme der optischen Erfassungsvorrichtung nur in solchen Fällen veranlasst, in denen die Notwendigkeit derer Benutzung erwartet wird. Die mit der Verwendung der optischen Erfassungsvorrichtung einhergehende Energieaufnahme wird durch diese Maßnahme reduziert.

Gemäß einer Weiterbildung des Verfahrens umfasst das Auswerten der BLE-basierten Kommunikation die Annäherungserkennung der Authentifikationsgeber-BLE-Schnittstelle innerhalb eines Verbindungsraums um die Fahrzeug-BLE-Schnittstelle. Dies bedeutet, dass die Fahrzeug-BLE-Schnittstelle schlicht erkennt, dass eine Authentifikationsgeber-BLE-Schnittstelle, die bevorzugt vorbekannt ist, sich innerhalb der Kommunikationsreichweite der Fahrzeug-BLE-Schnittstelle befindet. Dies kann beispielsweise erfolgen, indem die Fahrzeug-BLE-Schnittstelle ein Advertise-Signal der Authentifikationsgeber-BLE-Schnittstelle empfängt und als solche erkennt.

Bevorzugt wird gemäß einer Weiterbildung die optische Erfassungsvorrichtung zur Erfassung des Abstands des Bedieners angesteuert, wenn eine Verbindung zwischen der Authentifikationsgeber-BLE-Schnittstelle und der Fahrzeug-BLE-Schnittstelle etabliert ist. Zusätzlich kann die Bedingung gefordert sein, dass die etablierte Verbindung während einer vorgegebenen Mindestverbindungsdauer t_{V} etabliert bleibt. Dadurch, dass eine etablierte Verbindung zwischen den beiden BLE-Schnittstellen gefordert ist, wird eine Möglichkeit bereitgestellt, den Betrieb des Authentifizierungssystems auf gewünschte BLE-Schnittstellen einzuschränken. Dadurch, dass zusätzlich zu dem Etablieren der Verbindung auch das Aufrechterhalten der etablierten Verbindung während der vorgegebenen Mindestverbindungsdauer gefordert ist, wird mit Mitteln, die in der BLE-Spezifikation verankert sind, mit zumindest einer gewissen Genauigkeit eine Bestätigung herbeigeführt, dass der Bediener ohne Unterbrechung in einem umgrenzten Umkreis um das Fahrzeug verbleibt. Durch bedarfsgerechte Wahl der vorgegebenen Mindestverbindungsdauer kann, je nach erwartetem Szenario, dadurch ein unnötiges Einschalten beziehungsweise Ansteuern der optischen Erfassungsvorrichtung vermieden oder weitgehend vermieden werden. Weiterhin kann durch entsprechendes Einstellen der Mindestverbindungsdauer t_{V} erreicht werden, dass die optische Erfassungsvorrichtung nicht zu frühzeitig vor ihrer eigentlichen Verwendung eingeschaltet wird.

Erfindungsgemäß umfasst das Auswerten der BLE-basierten Kommunikation eine Bestimmung einer Signalstärke der BLE-basierten Kommunikation. Insbesondere kann eine Signalstärke der BLE-basierten Kommunikation am Ort der Authentifikationsgeber-BLE-Schnittstelle ermittelt werden. Alternativ oder zusätzlich kann eine Signalstärkenerfassung der BLE-basierten Kommunikation am Ort der Fahrzeug-BLE-Schnittstelle vorgesehen sein. Auch eine Kombination von beidem kann vorgesehen sein.

Zur Signalstärkeermittlung kann insbesondere eine spezifikationsgemäße RSSI-Wert-Ermittlung genutzt werden.

Ob eine Auswertung der erfassten Signalstärken innerhalb des Authentifikationsgebers, innerhalb einer fahrzeugseitigen Einrichtung (wie beispielsweise dem fahrzeugseitigen Steuergerät) oder in beiden erfolgt, kann bedarfsweise im Rahmen der Implementierung des Verfahrens berücksichtigt werden.

Ergänzend kann vorgesehen sein, dass die optische Erfassungsvorrichtung zur Erfassung des Abstands des Bedieners angesteuert wird, nachdem die Signalstärke der BLE-basierten Kommunikation einen vorgegebenen Grenzwert erreicht hat und für eine vorgegebene Mindestdauer t_{G} gehalten oder überschritten hat. Es kann also ein Schwellwert vorgesehen sein, welcher ununterbrochen überschritten sein muss, bevor die optische Erfassungsvorrichtung angesteuert wird. Ob die Auswertung der Signalstärke abgetastet erfolgt, eine Mittelwertbildung erfolgt oder ähnliche Auswertealgorithmen genutzt werden, ist vom Verwendungszweck und beispielsweise von gewünschter Latenzzeit und tolerierter Fehleranfälligkeit abhängig. Wesentlich ist, dass mit Berücksichtigung eines Grenzwerts t_{G} mit verbesserter Genauigkeit erkannt wird, wenn der Authentifikationsgeber sich dem Fahrzeug annähert und in einem begrenzten Umkreis des Fahrzeugs verbleibt, woraus auf einen Auslösewillen des Bedieners geschlossen wird.

Ergänzend ist erfindungsgemäß für das Ansteuern der optischen Erfassungsvorrichtung die Voraussetzung gefordert, dass die Signalstärke der BLE-basierten Kommunikation sich nach einer vorgegebenen Zeitdauer t_{D} zwischen ihrem Maximalwert und ihrem Minimalwert um weniger als eine Maximaldifferenz Deltaₘₐₓ geändert hat. So kann zusätzlich zu den bereits genannten Bedingungen die Auswertung auf einen möglichen stationären Verbleib des Bedieners innerhalb eines begrenzten Korridors hin verbessert werden.

Erfindungsgemäß ist vorgesehen,
- dass an dem Fahrzeug die Fahrzeug-BLE-Schnittstelle und ferner zumindest eine zweite Fahrzeug-BLE-Schnittstelle angeordnet ist,
- dass an dem Fahrzeug die optische Erfassungsvorrichtung und zumindest eine zweite Erfassungsvorrichtung vorgesehen ist,
- dass die Fahrzeug-BLE-Schnittstelle der optischen Erfassungsvorrichtung zugeordnet ist, und
- dass die zweite Fahrzeug-BLE-Schnittstelle der zweiten optischen Erfassungsvorrichtung zugeordnet ist.

Es ist also eine Konstellation vorgesehen, in der sowohl von den Fahrzeug-BLE-Schnittstellen als auch von den optischen Erfassungsvorrichtungen jeweils wenigstens zwei Exemplare vorgesehen sind. Jeder der wenigstens zwei Fahrzeug-BLE-Schnittstellen ist jeweils eine andere der optischen Erfassungsvorrichtungen zugeordnet.

Erfindungsgemäß wird diejenige der wenigstens zwei optischen Erfassungsvorrichtungen angesteuert, welche derjenigen der wenigstens zwei Fahrzeug-BLE-Schnittstellen zugeordnet ist, welche innerhalb eines vorgegebenen Zeitraums t_{S} die BLE-basierte Kommunikation durchgeführt hat, für welche die stärkste Signalstärke mit dem portablen Authentifikationsgeber ermittelt wurde.

Mit anderen Worten wird während des vorgegebenen Zeitraums t_{S} die Signalstärke der BLE-basierten Kommunikation mit jeder der beiden Fahrzeug-BLE-Schnittstellen ausgewertet. Wesentlich ist, dass der Vergleich von Signalstärken der BLE-basierten Kommunikation an verschiedenen Fahrzeug-BLE-Schnittstellen, die an verschiedenen Positionen des Fahrzeugs lokalisiert sind, genutzt wird, um diejenige von mehreren vorhandenen optischen Erfassungsvorrichtungen auszuwählen, für welche der größtmögliche Erfolg einer optischen Erfassung des Bedieners zu erwarten ist. Für die Zuordnung der Fahrzeug-BLE-Schnittstellen zu den Authentifikationsgeber-Schnittstellen kann vorgesehen sein, dass die Fahrzeug-BLE-Schnittstelle weniger von der optischen Erfassungsvorrichtung als von der zweiten optischen Erfassungsvorrichtung beabstandet ist, und dass die zweite Fahrzeug-BLE-Schnittstelle weniger von der zweiten optischen Erfassungsvorrichtung als von der optischen Erfassungsvorrichtung beabstandet ist. Die Zuordnung erfolgt in dieser Ausgestaltung nach dem geringsten Abstand von Fahrzeug-BLE-Schnittstelle und von optischer Erfassungsvorrichtung, wobei der Abstand im mathematischen Sinne als Länge der Strecke zwischen Fahrzeug-BLE-Schnittstelle und optischer Erfassungsvorrichtung zu verstehen ist. Das erfindungsgemäße Verfahren kann dahingehend weitergebildet sein, dass diejenige der wenigstens zwei optischen Erfassungsvorrichtungen angesteuert wird, welche derjenigen der wenigstens zwei Fahrzeug-BLE-Schnittstellen am nächsten ist, welche innerhalb eines vorgegebenen Zeitraums t_{S} die BLE-basierte Kommunikation mit der stärksten Signalstärke mit dem portablen Authentifikationsgeber durchgeführt hat. Die BLE-Kommunikation, die mit geringer Energieaufnahme zu betreiben ist, aber eine geringe Genauigkeit in der Positionsbestimmung erlaubt, trägt also zu einer Grobermittlung der Position des Bedieners bei.

Diese Grobermittlung wird sodann genutzt, um durch gezielte Auswahl von einer der vorhandenen optischen Erfassungsvorrichtungen ein gutes Ergebnis der optischen Positions- oder Entfernungsbestimmung des Bedieners zu erreichen. Dadurch, dass eine gezielte Auswahl der optischen Erfassungsvorrichtung erfolgt, wird die Erfassungsqualität verbessert und dadurch beispielsweise die Anzahl von Fehlauslösungen reduziert und die für optische Erfassung aufzuwendende Energie reduziert. Als optische Erfassungsvorrichtung können beispielsweise ein Laserinterferometer, eine laserbasierte Laufzeiterfassungsvorrichtung oder eine Time-of-Flight-Kamera vorgesehen sein. Auch kombinierte Anordnungen aus mehreren von diesen können vorgesehen sein. Die Position der optischen Erfassungsvorrichtung oder der optischen Erfassungsvorrichtungen kann dahingehend ausgewählt werden, wo eine Annäherung des Bedieners am ehesten zu erwarten ist. Beispielsweise kann vorgesehen sein, dass eine optische Erfassungsvorrichtung im Fahrzeuggriff, in der B-Säule, in einer oder mehrerer der Seitentüren, im Seitenspiegel und/oder an der Heckklappe angeordnet ist. Die optische Erfassungsvorrichtung ist bevorzugt derart ausgerichtet, dass der Abstand des Bedieners von einer der Seitentüren und/oder von der Heckklappe erfassbar ist. Insbesondere kann auch vorgesehen sein, dass die optische Erfassungsvorrichtung innerhalb des Fahrzeugs angeordnet ist und derart ausgerichtet ist, dass die Anwesenheit des Bedieners auf einer Fahrerposition verifiziert werden kann. Gemäß einer Ausgestaltung der Erfindung kann ferner vorgesehen sein, dass die Erfassungsvorrichtung nach ihrem Ansteuern einen Erfassungsbereich erfasst, der von der Erfassungsvorrichtung abgedeckt wird, und dadurch eine oder mehrere Authentifikationsaufnahmen generiert. Bei den Aufnahmen handelt es sich um mit der Erfassungsvorrichtung erfasste Daten, die zeitaufgelöst oder zu einem einzigen Zeitpunkt vorliegen können.

Die Art der Daten hängt von der Ausgestaltung der Erfassungsvorrichtung ab. Bei als Time-Of-Flight-3D-Kamera ausgebildeter Erfassungsvorrichtung kann es sich beispielsweise um eine 3D-Fotografie oder um eine zeitabhängige Sequenz von 3D-Fotografien handeln.

Gemäß dieser Weiterbildung werden die erfassten Daten mittels eines fahrzeugseitigen Steuergeräts ausgewertet. Die durchgeführte Auswertung kann eine oder mehrere der nachfolgend genannten umfassen:
Es kann ausgewertet werden, ob ein Bediener in seiner Hand ein Smartphone hält. Dies kann bei Nutzung einer Time-Of-Flight-3D-Kamera mittels Objekterkennung erfolgen.

Es kann ausgewertet werden, ob die erfassten Daten einen Verifikationscode zeigen, der von dem Steuergerät als berechtigend identifiziert wird. Beispielsweise kann mittels der Erfassungsvorrichtung ein auf einem Smartphone-Display angezeigter zwei- oder dreidimensionaler Barcode, insbesondere ein QR-Code, erfasst und ausgewertet werden, der beispielsweise in Reaktion auf die BLE-Kommunikation von dem Smartphone angezeigt wird und dieses identifiziert.

Es kann die Durchführung einer Bediengeste ausgewertet werden und mit kraftfahrzeugseitig hinterlegten Referenzgesten verglichen werden. Die Bediengeste kann, je nach Umsetzung des Verfahrens, dem Auslösen einer Funktion dienen oder alternativ oder zusätzlich zur Verifikation der Berechtigung des Bedieners beitragen. Die Verifikation der Berechtigung wird durch die Bediengeste unterstützt, wenn eine unintuitiv durchzuführende und als ausreichend komplex angesehene Bediengeste vorgesehen ist. Auch können separat voneinander Bediengesten und Berechtigungsgesten vorgesehen sein. Ferner kann vorgesehen sein, dass für unterschiedliche Benutzer unterschiedliche Bediengesten und/oder unterschiedliche Berechtigungsgesten vorgesehen sind.

Es kann ein in dem Erfassungsbereich befindliches Gesicht des Bedieners aufgenommen werden und anhand kraftfahrzeugseitig hinterlegter Referenzdaten auf die Berechtigung des Bedieners hin geprüft werden. Dies bietet sich insbesondere bei als Time-Of-Flight-3D-Kamera ausgebildeter Erfassungsvorrichtung an.

Dadurch, dass also eine Abbildung des Bedieners oder einer im Besitz des Bedieners vorhandenen Einrichtung oder auch einer Aktion des Bedieners ausgewertet wird, kann der Verifikationsprozess sicherer und zuverlässiger durchgeführt werden.

Gemäß einer Weiterbildung kann vorgesehen sein, dass der Authentifikationsgeber dem Fahrzeug Identifikationsdaten übermittelt, die von dem fahrzeugseitigen Steuergerät ausgewertet werden. Die Auswertung umfasst, ob die Identifikationsdaten mit aus der Authentifikationsaufnahme abgeleiteten Verifikationsdaten als zueinander gehörend verifiziert werden können. Dies bedeutet, dass das Kraftfahrzeug eine Verbindung zwischen Identifikationsdaten und Eigenschaften des Bedieners oder von ihm durchgeführten Aktionen kennt und prüft, ob die Identifikationsdaten zu den Verifikationsdaten passend sind. Durch diese Prüfung wird die Sicherheit des Verfahrens weiter erhöht, da beispielsweise in dem Fall eines Diebstahls des Authentifikationsgeräts eine Verifikation unterbleiben würde, wenn beispielsweise nicht das erwartete Gesicht des Bedieners von der Erfassungseinrichtung erkannt wird.

Die Identifikationsdaten können derart mit Verifikationsdaten in funktioneller Relation stehen, dass kraftfahrzeugseitig die Verifikationsdaten nicht bekannt sind, aber korrekte Identifikationsdaten und Verifikationsdaten mit genügender Sicherheit als zueinander gehörig erkannt werden. Beispielsweise können die Identifikationsdaten derart eingerichtet werden, dass sie und die Verifikationsdaten zueinander gehörige, insbesondere gleiche, Hash-Werte aufweisen.

Dadurch, dass die Identifikationsdaten mittels BLE-Übertragung und die Verifikationsdaten mittels optischer Erfassung übertragen werden, liegt eine Trennung der Kanäle vor, wodurch eine weiter verbesserte Sicherheit des Verfahrens erreicht werden kann.

Ein anderer Gedanke betrifft ein Authentifizierungssystem für ein Fahrzeug. Das Authentifizierungssystem für ein Fahrzeug weist dabei die eingangs im Zusammenhang mit dem erläuterten Verfahren vorgesehenen Anordnungen auf. Das Authentifizierungssystem weist ferner ein Steuergerät auf, das mit der Fahrzeug-BLE-Schnittstelle und mit der optischen Erfassungsvorrichtung gekoppelt ist und eingerichtet ist, das erfindungsgemäße Verfahren oder eine seiner Weiterbildungen durchzuführen.

Ein weiterer Gedanke sieht eine Verwendung eines Authentifizierungssystems der oben genannten Art zur Entfernungsbestimmung eines Bedieners mit einem portablen Authentifikationsgeber vor. Zur Entfernungsbestimmung ist vorgesehen, dass die optische Erfassungsvorrichtung mittels des Steuergeräts eingeschaltet wird, wenn nach einer BLE-basierten Kommunikation zwischen der Fahrzeug-BLE-Schnittstelle und der Authentifikationsgeber-BLE-Schnittstelle eine fahrzeugseitige Auswertung der BLE-basierten Kommunikation feststellt, dass die BLE-basierte Kommunikation eine Anwesenheit des portablen Authentifikationsgebers innerhalb eines vorgegebenen Raums um die Fahrzeug-BLE-Schnittstelle repräsentiert. Mit anderen Worten wird die optische Erfassungsvorrichtung eingeschaltet, sobald die Auswertung der BLE-basierten Kommunikation eine Anwesenheit des Bedieners in einem Erfassungsbereich der optischen Erfassungsvorrichtung möglich erscheinen lässt.

Mit dem Authentifizierungssystem und der Verwendung des Authentifizierungssystems gehen die erläuterten Vorteile des erfindungsgemäßen Verfahrens und seiner Weiterbildungen in analoger Weise einher.

Weitere Einzelheiten, Merkmale und Vorteile des Gegenstands der Erfindung ergeben sich aus der nachfolgenden Beschreibung im Zusammenhang mit der Zeichnung, in welcher beispielhaft ein Ausführungsbeispiel der Erfindung dargestellt ist.

Es versteht sich, dass die vorstehend genannten wie auch nachfolgend erläuterten Merkmale nicht nur in der jeweils angegebenen Kombination, sondern auch in anderen Kombinationen oder in Alleinstellung verwendbar sind.

Es zeigen:
- Fig. 1 : eine schematische Darstellung einer beispielhaften Ausgestaltung eines Authentifizierungssystems;
- Fig. 2 : eine schematische Darstellung einer erfindungsgemäßen Ausführungsform eines Authentifizierungssystems.

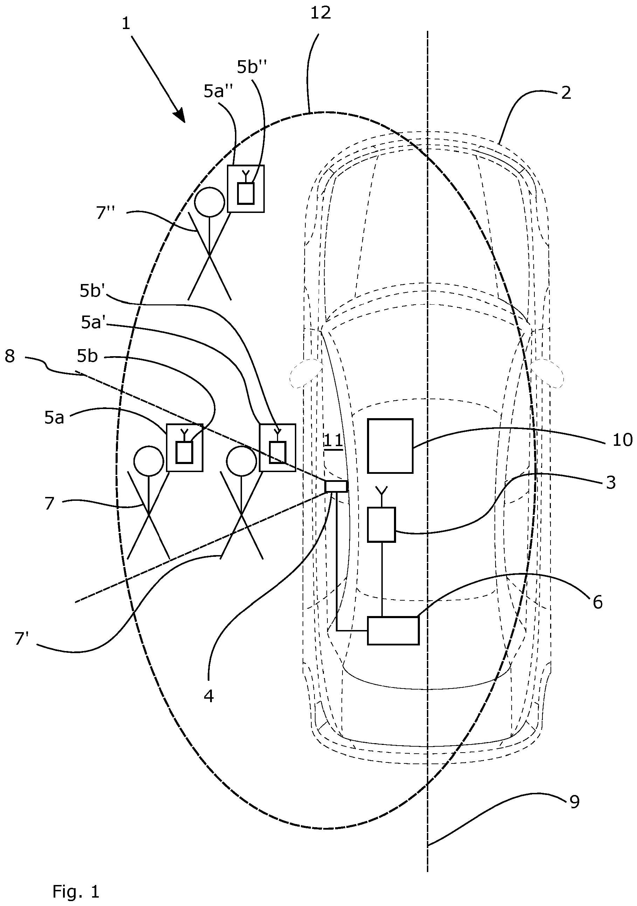

Fig. 1 ist eine schematische Darstellung einer beispielhaften Ausgestaltung eines Authentifizierungssystems 1 für ein Fahrzeug 2 zu entnehmen. Das Authentifizierungssystems 1 umfasst eine Fahrzeug-BLE-Schnittstelle 3 die nicht sichtbar und von einer Verkleidung umgeben an dem Fahrzeug 2 angeordnet ist. An der B-Säule des Fahrzeugs 2 ist eine als Time-of-Flight-Kamera (TOF-Kamera) ausgebildete optische Erfassungsvorrichtung 4 angeordnet. Die TOF-Kamera 4 ist in der gezeigten Darstellung derart orientiert, dass ein Erfassungsbereich 8 der TOF-Kamera eine Zentralachse aufweist, die senkrecht zur Symmetrieebene 9 des Fahrzeugs orientiert ist. Die Orientierung der TOF-Kamera 4 ist derart gewählt, dass ein Bediener 7, der Zugang zum Fahrersitz 10 des Fahrzeugs 3 sucht, sich unvermeidlich zumindest zeitweise innerhalb des Erfassungsbereichs 8 der Seitentür 11 nähert. Das Authentifizierungssystem 1 weist ferner ein fahrzeugseitiges Steuergerät 6 auf, das sowohl mit der Fahrzeug-BLE-Schnittstelle 3 als auch mit der optischen Erfassungsvorrichtung 4 gekoppelt ist und für deren Steuerung vorgesehen ist.

Wenn der Bediener 7 in den Verbindungsraum 12 um die Fahrzeug-BLE-Schnittstelle 3 eintritt, und dabei einen portablen Authentifikationsgeber 5a mit einer Authentifikationsgeber-BLE-Schnittstelle 5b mit sich führt, wird eine BLE-basierte Kommunikation zwischen der Fahrzeug-BLE-Schnittstelle 3 und der Authentifikationsgeber-BLE-Schnittstelle 5b durchgeführt. In der dargestellten Ausgestaltung erfolgt die Aufnahme der BLE-basierten Kommunikation dadurch, dass die Authentifikationsgeber-BLE-Schnittstelle 5b spezifikationsgemäß ein Advertise-Signal aussendet, welches von der Fahrzeug-BLE-Schnittstelle 3 erfasst wird. Dadurch, dass die BLE-basierte Kommunikation durchgeführt wird, erkennt das fahrzeugseitige Steuergerät 6, dass der Authentifikationsgeber 5a sich innerhalb des Verbindungsraums 12 befindet. Der Verbindungsraum 12 ist nicht als statisch definierter Raum zu verstehen, da äußere Einflüsse (wie beispielsweise die Position des Authentifikationsgebers 5a, 5a', 5a" am Körper des Bedieners 7, 7', 7") die Ausdehnung des Verbindungsraums beeinflussen. Als Folge der Annäherungserkennung des Authentifikationsgebers 5a durch die Fahrzeug-BLE-Schnittstelle 3 steuert das fahrzeugseitige Steuergerät 6 die TOF-Kamera 4 an und veranlasst, dass diese aus dem Zustand mit reduzierter Energieaufnahme in den Betriebszustand versetzt wird. Mittels der TOF-Kamera 4 kann zum einen ermittelt werden, ob der Bediener 7 sich innerhalb des Erkennungsbereichs der TOF-Kamera 4 befindet. Der Bediener 7 befindet sich innerhalb des Erkennungsraums, während der Bediener 7" sich nicht innerhalb des Erkennungsraum befindet. Abhängig davon, ob der Bediener sich an der Position 7 oder an der Position 7" befindet, kann entsprechend ein Auslösen der Funktion beeinflusst werden. Beispielsweise kann vorgesehen sein, dass ein an Position 7" befindlicher Bediener dazu führt, dass kein Öffnen der Fahrzeugtür veranlasst wird, da die Position des Bedieners 7" dahingehend interpretiert wird, dass der Bediener keinen Eintritt in das Fahrzeug 2 zum Einnehmen der Fahrerposition 10 beabsichtigt. An der Position 7 befindlich kann mittels der TOF-Kamera nun ermittelt werden, welchen Abstand der Bediener zu dem Fahrzeug einnimmt und wie der Abstand des Bedieners sich zeitlich verändert. Wenn der Bediener von der Position 7 zu der Position 7' vorrückt, würde dies mittels BLE-basierter Kommunikation nicht oder nur mit sehr hoher Messunsicherheit erfasst werden können. Aufgrund der zusätzlichen Auswertung mit der optischen Erfassungsvorrichtung 4 kann in vorteilhafter Weise mit hoher Präzision und, sofern gewünscht auch zeitabhängig, erfasst werden, in welchem Abstand der Bediener 7, 7' sich befindet. Dadurch wird dem fahrzeugseitigen Steuergerät 6 Datenmaterial bereitgestellt zur Auswertung, ob eine Funktion am Fahrzeug 2 ausgelöst werden soll und welche Auslösevarianten gewünscht sind. Die Auslösung selbst sowie deren Auswahl ist nicht Bestandteil der Erfindung, sondern kann implementiert werden basierend auf Informationen, die unter Nutzung des erfindungsgemäßen Verfahrens gewonnen werden.

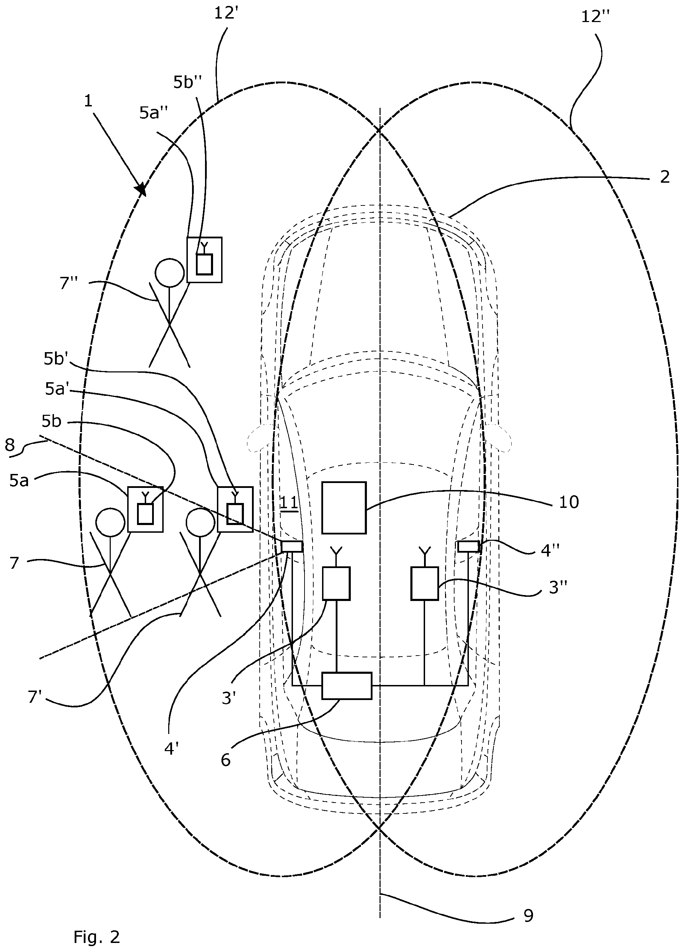

Eine Ausführungsform der Erfindung ist Fig. 2 zu entnehmen. Wie dargestellt ist, weist die weitere Ausgestaltung zusätzlich zu der Fahrzeug-BLE-Schnittstelle 3' und der optischen Erfassungsvorrichtung 4' eine zweite Fahrzeug-BLE-Schnittstelle 3" und eine zweite optische Erfassungsvorrichtung 4" auf. Die optische Erfassungsvorrichtung 4' ist als TOF-Kamera ausgebildet, die an der fahrerseitigen B-Säule angeordnet ist, die zweite optische Erfassungsvorrichtung 4" ist ebenfalls als TOF-Kamera ausgebildet, die an der beifahrerseitigen B-Säule angeordnet ist.

Mit der in Fig. 2 dargestellten Ausführungsform eines Authentifizierungssystems 1 kann beispielsweise vorgesehen werden, dass bei Eintritt des Bedieners 7 in den Verbindungsraum 12' oder bei Eintritt des Bedieners in den Verbindungsraum 12" beide TOF-Kameras 4' und 4" aktiviert werden, um festzustellen, ob der Bediener 7 innerhalb eines der Erfassungsbereiche 8 einer der beiden TOF-Kameras befindlich ist, oder ob der Bediener stattdessen außerhalb der beiden Erfassungsbereiche befindlich ist. Es kann aber auch vorgesehen sein, dass bei Eintritt des Bedieners in den Erfassungsraum 12', nicht aber in den Erfassungsraum 12" ausschließlich die optische Erfassungsvorrichtung 4' angesteuert wird zur optischen Positionsbestimmung oder Entfernungsbestimmung des Bedieners. Es ist vorgesehen, dass eine Signalstärke einer BLE-basierten Kommunikation zwischen der Authentifikationsgeber-BLE-Schnittstelle 5b und der Fahrzeug-BLE-Schnittstelle 3' sowie eine Signalstärke zwischen der Authentifikationsgeber-BLE-Schnittstelle 5b und der Fahrzeug-BLE-Schnittstelle 3" erfasst wird und dass beide miteinander verglichen werden. Auf diese Weise kann verfahren werden, wenn der Bediener sich an einem Ort befindet, von dem aus eine BLE-Kommunikation mit mehreren Fahrzeug-BLE-Schnittstellen möglich ist. Die optische Erfassungsvorrichtung 4' ist der Fahrzeug-BLE-Schnittstelle 3' zugeordnet. Die Zuordnung wirkt sich in der dargestellten Ausführungsform derart aus, dass bei stärkerem Signal an der Position der Fahrzeug-BLE-Schnittstelle 3' ein größerer Erfassungserfolg für die optische Erfassungsvorrichtung 4' erwartet werden kann. Analoges gilt für die BLE-basierte Kommunikation mit der Fahrzeug-BLE-Schnittstelle 3" : Wenn die BLE-basierte Kommunikation mit der Fahrzeug-BLE-Schnittstelle 3" stärker ist als mit der Fahrzeug-BLE-Schnittstelle 3', ist ein größerer Erfassungserfolg mit der optischen Erfassungsvorrichtung 4" zu erwarten. Es wird also diejenige der wenigstens zwei optischen Erfassungsvorrichtungen angesteuert, welche derjenigen der wenigstens zwei Fahrzeug-BLE-Schnittstellen zugeordnet ist, die eine stärkste Signalstärke mit dem portablen Authentifikationsgeber erreicht hat.

## Patentansprüche

1. Verfahren zum Betreiben eines Authentifizierungssystems (1) für ein Fahrzeug (2),
wobei an dem Fahrzeug (2) eine Fahrzeug-BLE-Schnittstelle (3, 3', 3'') angeordnet ist,
wobei an dem Fahrzeug (2) eine optische Erfassungsvorrichtung (4, 4', 4'') angeordnet ist, und
wobei ein portabler Authentifikationsgeber (5a, 5a', 5a") mit einer Authentifikationsgeber-BLE-Schnittstelle (5b, 5b', 5b'') vorgesehen ist,
mit den Schritten:
Durchführen einer BLE-basierten Kommunikation zwischen der Fahrzeug-BLE-Schnittstelle (3, 3', 3'') und der Authentifikationsgeber-BLE-Schnittstelle (5b, 5b', 5b''),
fahrzeugseitiges Auswerten der BLE-basierten Kommunikation,
Ansteuerung der optischen Erfassungsvorrichtung (4, 4', 4'') in Abhängigkeit von der Auswertung der BLE-basierten Kommunikation zur optischen Positionsbestimmung oder Entfernungsbestimmung eines Bedieners, der den portablen Authentifikationsgeber (5a, 5a', 5a'') mit sich führt,
wobei das Auswerten der BLE-basierten Kommunikation eine Bestimmung einer Signalstärke der BLE-basierten Kommunikation umfasst, wobei
die optische Erfassungsvorrichtung (4, 4', 4'') angesteuert wird, nachdem sich die Signalstärke der BLE-basierten Kommunikation innerhalb einer vorgegebenen Zeitdauer t_{D} zwischen ihrem Maximalwert und ihrem Minimalwert um weniger als eine Maximaldifferenz Deltaₘₐₓ geändert hat,
wobei an dem Fahrzeug die Fahrzeug-BLE-Schnittstelle (3') und zumindest eine zweite Fahrzeug-BLE-Schnittstelle (3") vorgesehen sind,
an dem Fahrzeug die optische Erfassungsvorrichtung (4') und zumindest eine zweite optische Erfassungsvorrichtung (4") vorgesehen sind,
die Fahrzeug-BLE-Schnittstelle (3') der optischen Erfassungsvorrichtung (4') zugeordnet ist,
die zweite Fahrzeug-BLE-Schnittstelle (3") der zweiten optischen Erfassungsvorrichtung (4") zugeordnet ist, und
diejenige der wenigstens zwei optischen Erfassungsvorrichtungen (4', 4") angesteuert wird, welche derjenigen der wenigstens zwei Fahrzeug-BLE-Schnittstellen (3', 3") zugeordnet ist, welche innerhalb eines vorgegebenen Zeitraums t_{S} die BLE-basierte Kommunikation durchgeführt hat, für welche die stärkste Signalstärke mit dem portablen Authentifikationsgeber (5a, 5a', 5a") ermittelt wurde, sodass der Vergleich von Signalstärken der BLE-basierten Kommunikation an verschiedenen Fahrzeug-BLE-Schnittstellen, die an verschiedenen Positionen des Fahrzeugs lokalisiert sind, genutzt wird, um diejenige von mehreren vorhandenen optischen Erfassungsvorrichtungen auszuwählen, für welche der größtmögliche Erfolg einer optischen Erfassung des Bedieners zu erwarten ist.

2. Verfahren nach Anspruch 1, **dadurch gekennzeichnet, dass** die optische Erfassungsvorrichtung (4, 4', 4") sich in einem Zustand mit reduzierter Energieaufnahme befindet und aus diesem in einen Betriebszustand versetzt wird nachdem die Auswertung der BLE-basierten Kommunikation ergeben hat, dass der portable Authentifikationsgeber (5a, 5a', 5a") sich innerhalb eines vorgegebenen Raums um die Fahrzeug-BLE-Schnittstelle (3, 3', 3'') befindet.

3. Verfahren nach Anspruch 1 oder nach Anspruch 2, **dadurch gekennzeichnet, dass** das Auswerten der BLE-basierten Kommunikation die Annäherungserkennung der Authentifikationsgeber-BLE-Schnittstelle (5b, 5b', 5b'') innerhalb eines Verbindungsraums um die Fahrzeug-BLE-Schnittstelle (3, 3', 3'') umfasst.

4. Verfahren nach Anspruch 3, **dadurch gekennzeichnet, dass** die optische Erfassungsvorrichtung (4, 4', 4'') zur Erfassung des Abstands des Bedieners angesteuert wird, wenn eine Verbindung zwischen der Authentifikationsgeber-BLE-Schnittstelle (5b, 5b', 5b'') und der Fahrzeug-BLE-Schnittstelle (3, 3', 3'') etabliert ist und die etablierte Verbindung während einer vorgegebenen Mindestverbindungsdauer t_{V} etabliert bleibt.

5. Verfahren nach einem der vorhergehenden Ansprüche, **dadurch gekennzeichnet, dass** die optische Erfassungsvorrichtung (4, 4', 4'') zur Erfassung des Abstands des Bedieners angesteuert wird, nachdem die Signalstärke der BLE-basierten Kommunikation einen vorgegebenen Grenzwert erreicht hat und für eine vorgegebene Mindestdauer t_{G} gehalten oder überschritten hat.

6. Verfahren nach einem der vorhergehenden Ansprüche, **dadurch gekennzeichnet, dass** die optische Erfassungsvorrichtung (3, 3', 3'')
- als Laserinterferometer,
- als laserbasierte Laufzeiterfassungsvorrichtung, oder
- als Time-of-Flight-Kamera
ausgebildet ist.

7. Verfahren nach einem der vorhergehenden Ansprüche,
**dadurch gekennzeichnet,**
**dass** die Erfassungsvorrichtung (3, 3', 3"), nachdem sie angesteuert wurde, während eines Erfassungszeitraums einen von der Erfassungsvorrichtung (3, 3', 3") ausgeleuchteten Erfassungsbereich erfasst zur Gewinnung von einer Authentifikationsaufnahme oder mehreren Authentifikationsaufnahmen, und
**dass** ein fahrzeugseitiges Steuergerät die Authentifikationsaufnahme oder die Authentifikationsaufnahmen auswertet
- auf das Vorhandensein eines in einer Hand eines Bedieners befindlichen Smartphones, und/oder
- auf eine Validität eines als Bestandteil der Authentifikationsaufnahme erkannten Verifikationscodes, und/oder
- auf eine innerhalb des Erfassungsbereichs durchgeführte und dem Steuergerät bekannte Bediengeste, und/oder
- auf ein in dem Erfassungsbereich befindliches und dem Steuergerät bekanntes Gesicht.

8. Verfahren nach Anspruch 7, **dadurch gekennzeichnet, dass** der Authentifikationsgeber dem Fahrzeug Identifikationsdaten übermittelt, und das fahrzeugseitige Steuergerät auswertet, ob die Identifikationsdaten mit aus der Authentifikationsaufnahme abgeleiteten Verifikationsdaten als zueinander gehörend verifiziert werden können.

## Claims

1. Method of operating an authentication system (1) for a vehicle (2),
wherein a vehicle BLE interface (3, 3', 3'') is arranged on the vehicle (2),
wherein an optical detection device (4, 4', 4'') is arranged on the vehicle (2), and
wherein a portable authentication transmitter (5a, 5a', 5a'') having an authentication transmitter BLE interface (5b, 5b', 5b'') is provided,
with the steps:
Performing a BLE-based communication between the vehicle BLE interface (3, 3', 3'') and the authenticator BLE interface (5b, 5b', 5b''),
Evaluating of BLE-based communication on the vehicle side,
Controlling the optical detection device (4, 4', 4'') in dependence on the evaluation of the BLE-based communication for optical position determination or distance determination of an operator who carries the portable authentication transmitter (5a, 5a', 5a''),
wherein evaluating the BLE-based communication comprises determining a signal strength of the BLE-based communication, wherein
the optical detection device (4, 4', 4'') is actuated after the signal strength of the BLE-based communication has changed by less than a maximum difference Deltaₘₐₓ between its maximum value and its minimum value within a predetermined time period t_{D},
wherein
the vehicle BLE interface (3') and at least a second vehicle BLE interface (3'') are provided on the vehicle,
the optical detection device (4') and at least a second optical detection device (4'') are provided on the vehicle,
the vehicle BLE interface (3') is associated with the optical detection device (4'),
the second vehicle BLE interface (3'') is associated with the second optical detection device (4''), and
the one of the at least two optical detection devices (4', 4'') associated with the one of the at least two vehicle BLE interfaces (3', 3'') which has performed the BLE-based communication within a predetermined time period t_{S} for which the strongest signal strength has been determined with the portable authentication transmitter (5a, 5a', 5a'') has been determined, such that the comparison of signal strengths of the BLE-based communication at different vehicle BLE interfaces located at different positions of the vehicle is used to select that particular one of several existing optical detection devices for which the greatest possible success of an optical detection of the operator is to be expected.

2. Method according to claim 1, **characterized in that** the optical detection device (4, 4', 4'') is in a reduced energy consumption state and is switched from this to an operating state after the evaluation of the BLE-based communication has revealed that the portable authentication transmitter (5a, 5a', 5a'') is located within a predetermined space around the vehicle BLE interface (3, 3', 3'').

3. Method according to claim 1 or according to claim 2, **characterized in that** the evaluating of the BLE-based communication comprises proximity detection of the authenticator BLE interface (5b, 5b', 5b'') within a connection space around the vehicle BLE interface (3, 3', 3").

4. Method according to claim 3, **characterized in that** the optical detection device (4, 4', 4'') for detecting the operator's distance is actuated when a connection between the authenticator BLE interface (5b, 5b', 5b'') and the vehicle BLE interface (3, 3', 3'') is established and the established connection remains established for a predetermined minimum connection duration t_{V}.

5. Method according to any one of the preceding claims, **characterized in that** the optical detection device (4, 4', 4'') is triggered to detect the operator's distance after the signal strength of the BLE-based communication has reached a predetermined threshold and has maintained or exceeded said threshold for a predetermined minimum duration t_{G}.

6. Method according to any one of the preceding claims, **characterized in that** the optical detection device (3, 3', 3'') is embodied
- as a laser interferometer,
- as a laser-based time-of-flight detection device, or
- as time-of-flight camera.

7. Method according to any one of the preceding claims, **characterized**
**in that** the detection device (3, 3', 3''), after it has been driven, detects a detection area illuminated by the detection device (3, 3', 3'') during a detection period in order to obtain one or more authentication recordings, and
**in that** a vehicle-side control unit evaluates the authentication recording or recordings
- for the presence of a smartphone in the hand of an operator, and/or
- for a validity of a verification code recognized as part of the authentication record, and/or
- for an operating gesture performed within the detection range and known to the control unit, and/or
- for a face located in the detection zone and known to the control unit.

8. Method according to claim 7, **characterized in that** the authentication transmitter transmits identification data to the vehicle, and the vehicle-side control unit evaluates whether the identification data can be verified as belonging to each other with verification data derived from the authentication recording.

## Revendications

1. Procédé de fonctionnement d'un système
d'authentification (1) pour un véhicule (2),
dans lequel une interface BLE de véhicule (3, 3', 3'') est disposée sur le véhicule (2),
dans lequel un dispositif de détection optique (4, 4', 4'') est disposé sur le véhicule (2), et
dans lequel un émetteur d'authentification portable (5a, 5a', 5a'') ayant une interface BLE d'émetteur d'authentification (5b, 5b', 5b'') est fourni,
avec les étapes :
Réalisation d'une communication basée sur BLE entre l'interface BLE du véhicule (3, 3', 3'') et l'interface BLE d'émetteur d'authentification (5b, 5b', 5b''),
Évaluation embarquée de la communication basée sur BLE,
Commande du dispositif de détection optique (4, 4', 4'') en fonction de l'évaluation de la communication basée sur BLE pour la détermination optique de la position ou de la distance d'un opérateur portant l'émetteur d'authentification portable (5a, 5a', 5a''),
dans lequel l'évaluation de la communication basée sur BLE comprend la détermination d'une force de signal de la communication basée sur BLE,
dans lequel le dispositif de détection optique (4, 4', 4'') est déclenché après que l'intensité du signal de la communication basée sur la technologie BLE a changé de moins d'une différence maximale Deltaₘₐₓ entre sa valeur maximale et sa valeur minimale dans une période de temps prédéterminée t_{D},
dans lequel l'interface BLE de véhicule (3') et au moins une seconde interface BLE de véhicule (3'') sont fournies sur le véhicule,
le dispositif de détection optique (4') et au moins un deuxième dispositif de détection optique (4'') sont prévus sur le véhicule,
l'interface BLE du véhicule (3') est associée au dispositif de détection optique (4'),
la deuxième interface BLE de véhicule (3'') est associée au deuxième dispositif de détection optique (4''), et
l'un des au moins deux dispositifs de détection optique (4', 4'') associés à l'une des au moins deux interfaces BLE de véhicule (3', 3'') qui a effectué la communication basée sur BLE au cours d'une période de temps prédéterminée t_{S} pour laquelle la plus forte intensité de signal a été déterminée avec l'émetteur d'authentification portable (5a, 5a', 5a'') a été déterminée, de sorte que la comparaison des intensités de signal de la communication basée sur la technologie BLE au niveau de différentes interfaces BLE du véhicule situées à différentes positions du véhicule est utilisée pour sélectionner l'un des nombreux dispositifs de détection optique existants pour lequel on peut s'attendre à la plus grande réussite possible d'une détection optique de l'opérateur.

2. Procédé selon la revendication 1, **caractérisé en ce que** le dispositif de détection optique (4, 4', 4'') est dans un état de consommation d'énergie réduite et est commuté de celui-ci à un état opérationnel après que l'évaluation de la communication basée sur BLE a révélé que le transmetteur d'authentification portable (5a, 5a', 5a'') est situé dans un espace prédéterminé autour de l'interface BLE du véhicule (3, 3', 3").

3. Procédé selon la revendication 1 ou selon la revendication 2, **caractérisé en ce que** l'évaluation de la communication basée sur BLE comprend la détection de proximité de l'interface BLE de l'émetteur d'authentification (5b, 5b', 5b'') dans un espace de connexion autour de l'interface BLE du véhicule (3, 3', 3").

4. Procédé selon la revendication 3, **caractérisé en ce que** le dispositif de détection optique (4, 4', 4'') pour détecter la distance de l'opérateur est actionné lorsqu'une connexion entre l'interface BLE d'émetteur d'authentification (5b, 5b', 5b'') et l'interface BLE du véhicule (3, 3', 3'') est établie et que la connexion établie reste établie pendant une durée de connexion minimale prédéterminée t_{V}.

5. Procédé selon l'une quelconque des revendications précédentes, **caractérisé en ce que** le dispositif de détection optique (4, 4', 4'') pour détecter la distance de l'opérateur est déclenché après que l'intensité du signal de la communication basée sur BLE a atteint un seuil prédéterminé et l'a maintenu ou dépassé pendant une durée minimale prédéterminée t_{G}.

6. Procédé selon l'une quelconque des revendications précédentes, **caractérisé en ce que** le dispositif de détection optique (3, 3', 3'') est formé
- comme un interféromètre laser,
- comme un dispositif de détection du temps de vol par laser, ou
- comme une caméra à temps de vol.

7. Procédé selon l'une quelconque des revendications précédentes, **caractérisé**
**en ce que** le dispositif de détection (3, 3', 3''), après avoir été déclenché, détecte une zone de détection éclairée par le dispositif de détection (3, 3', 3'') pendant une période de détection afin d'obtenir un ou plusieurs enregistrements d'authentification, et
qu'une unité de commande côté véhicule évalue le ou les enregistrements d'authentification
- la présence d'un smartphone dans la main d'un opérateur, et/ou
- sur la validité d'un code de vérification reconnu comme faisant partie de l'enregistrement d'authentification, et/ou
- à un geste opérationnel effectué dans la plage de détection et connu de l'unité de commande, et/ou
- sur un visage situé dans la zone de détection et connu de l'unité de contrôle.

8. Procédé selon la revendication 7, **caractérisé en ce que** l'émetteur d'authentification portable transmet des données d'identification au véhicule, et l'unité de commande côté véhicule évalue si les données d'identification peuvent être vérifiées comme appartenant les unes aux autres avec des données de vérification dérivées de l'enregistrement d'authentification.
